Europäisches Patentamt

European Patent Office

Office européen des brevets

(11) Numéro de publication : **0 289 384 B1**

(12) ## FASCICULE DE BREVET EUROPEEN

(45) Date de publication du fascicule du brevet :
**13.05.92 Bulletin 92/20**

(51) Int. Cl.[5] : **H04L 1/06,** H04L 1/20,
H04B 7/08

(21) Numéro de dépôt : **88400854.1**

(22) Date de dépôt : **08.04.88**

(54) **Procédé de sélection automatique d'une antenne de réception directive parmi une pluralité d'antennes de réception.**

(30) Priorité : **14.04.87 FR 8705263**

(43) Date de publication de la demande :
**02.11.88 Bulletin 88/44**

(45) Mention de la délivrance du brevet :
**13.05.92 Bulletin 92/20**

(84) Etats contractants désignés :
**DE GB IT**

(56) Documents cités :
**US-A- 4 074 358
THE TRANSACTIONS OF THE IECE OF
JAPAN, vol. E 68, no. 1, janvier 1985, pages
1-6, Tokyo, JP; H. SUZUKI et al.: "A newswitching diversity technique utilizing carrier-jitter
sensor for mobile radio applications"**

(56) Documents cités :
**IEEE TRANSACTIONS ON VEHICULAR TECH-
NOLOGY, vol. VT-33, no. 3, août 1984, pages
220-226, IEEE, New York, US; H. SUZUKI et
al.:"Digital portable transceiver using GMSK
modem and ADM codec"
ELECTRONICS LETTERS, vol. 15, no. 24, 22
novembre 1979, page 774, IEE, GB; P.
COCHRANE et al.: "Direct jitter measurementtechnique"**

(73) Titulaire : **THOMSON-CSF
51, Esplanade du Général de Gaulle
F-92800 Puteaux (FR)**

(72) Inventeur : **Journeau, Rémy
THOMSON-CSF SCPI 19, avenue de Messine
F-75008 Paris (FR)**

(74) Mandataire : **Lincot, Georges et al
THOMSON-CSF SCPI
F-92045 PARIS LA DEFENSE CEDEX 67 (FR)**

**Description**

La présente invention concerne un procédé de sélection automatique d'une antenne de réception directive parmi une pluralité d'antennes de réception.

Dans les systèmes de transmission par voie radioélectrique, les stations de réception possèdent fréquemment une antenne omnidirectionnelle et plusieurs antennes directives. Dans de nombreux cas, la fonction de choix d'antenne est réalisée par le biais d'opérateurs. Ceux-ci écoutent le signal basse fréquence reçu successivement sur chacune des antennes directives qui leur sont allouées et sélectionnent l'antenne qui fournit le signal le plus audible. Outre le fait que l'on peut reprocher à cette méthode son caractère subjectif, les opérateurs doivent procéder à plusieurs essais avant de sélectionner l'antenne la mieux adaptée, et ceci entraîne des lenteurs dans l'établissement des communications qui sont préjudiciables à l'acheminement rapide des messages dans les réseaux de télécommunications. Cependant pour pallier les inconvénients précités des critères de choix plus objectif ont déjà été proposés notamment en transmission numérique où la qualité de la transmission peut être jugée, consistant par exemple à mesurer la gigue de phase des signaux reçus comme cela est décrit dans l'article : The transaction of the IECE of Japan Vol E68 n°1 Janvier 1985 pages 1-6 - Tokyo, JP ; H. SUZUKI et AI : "A new switching diversity technique utilizing carrier-jitter sensor for mobil radio applications" ou encore en mesurant pour déterminer la gigue de phase de déplacement en temps relatif de chaque impulsion de donnée comme cela est décrit dans le brevet US A 4 074 358 ayant pour titre "Test set for measuring jitter distorsion of data pulses" ou encore en comptant le nombre de bits erronés présents dans une trame particulière des messages transmis pour chaque antenne à qualifier. Mais ceci requiert la mise en oeuvre de séquences numériques particulières et leur longueur doit être cohérente avec celle des taux d'erreur que l'on cherche à mesurer ; il faut par exemple quelques milliers de bits si le taux d'erreur recherché est de $10^{-3}$. D'autre part, il peut arriver que le temps nécessaire pour la mesure dépasse la durée de stabilité du canal de transmission et que pendant cette durée, des évanouissements (fading ) se produisent et modifient le taux d'erreur binaire du canal de transmission, et dans ces conditions la mesure perd toute son utilité.

Le but de l'invention est de pallier les inconvénients précités.

A cet effet, l'invention a pour objet, un procédé de sélection automatique d'une antenne de réception directive parmi une pluralité d'antennes de réception d'une station radioélectrique d'émission-réception de signaux numériques , dans lequel la gigue de phase des signaux binaires des trames de roulement reçus successivement sur chacune des antennes directives est calculée pour sélectionner l'antenne directive qui présente la gigue de phase la plus faible, caractérisé en ce qu'il consiste pour calculer la gigue de phase du signal numérique reçu sur chaque antenne, à mesurer la durée $d_i$ de m signaux binaires reçus, à calculer la variance $\sigma^2 T$ des valeurs de durée suivant la relation :

$$\sigma^2 T = \sum_{i=1}^{m} \frac{(d_i - moy(d_i))^2}{m} \qquad (1)$$

où $moy(d_i)$ représente la moyenne des durées $d_i$ et à calculer à partir de la valeur de l'écart type $\sigma T$ la gigue de phase en effectuant le rapport $\sigma T/T$ ou T représente la durée nominale de chaque signal binaire et en ce que la sélection est suivie d'une séquence de confirmation.

Le procédé selon l'invention présente l'avantage qu'il permet le choix automatique et rapide de la meilleure antenne directive de réception c'est-à-dire de l'antenne directive qui, parmi toutes les antennes qui sont disposées autour d'une station de réception, présente par rapport à une source d'émission donnée la meilleure orientation.

D'autres caractéristiques et avantages de l'invention apparaîtront ci-après à l'aide de la description qui va suivre faite en regard des dessins annexés qui représentent :

Les figures 1 et 2 des organigrammes illustrant les différentes étapes du procédé selon l'invention.

La figure 3 un graphe de la relation existant entre la gigue de phase et le rapport signal à bruit dans un canal de transmission où une modulation de type à déplacement de fréquence est utilisée.

La figure 4 un graphe de la relation entre le taux d'erreur binaire et le rapport signal/bruit dans le cas où une modulation de type à déplacement de fréquence est utilisée.

La figure 5 un tableau donnant les valeurs numériques reliant notamment le taux d'erreur binaire et la gigue de phase dans un canal de transmission dans le cas où une modulation de type à déplacement de fréquence est utilisée.

La figure 6 un diagramme fonctionnel d'un dispositif pour la mise en oeuvre du procédé selon l'invention.

La figure 7 un mode de réalisation d'un dispositif pour la mise en oeuvre du procédé selon l'invention.

2

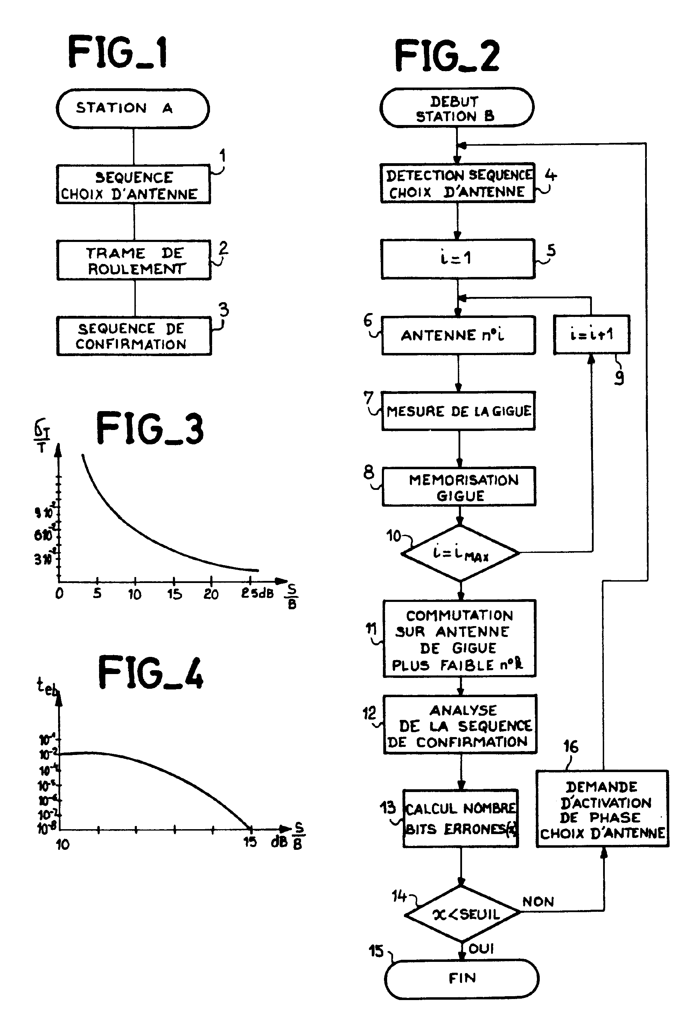

Le procédé selon l'invention, qui est illustré aux figures 1 et 2, consiste à mesurer la gigue de phase d'un signal numérique reçu par chaque station de réception d'un réseau concerné par ce signal, successivement sur chacune des antennes directives lui appartenant. L'antenne qui est associée à la gigue de phase la plus faible est choisie à condition qu'une séquence de confirmation puisse être reconnue dans un délai déterminé.

Le procédé s'insère dans un dialogue à l'alternat entre au moins deux stations A et B, cette dernière disposant d'un nombre n "d'antennes directives". Le diagramme de la figure 1 illustre le déroulement des opérations effectuées par la station A et le diagramme de la figure 2 celui des opérations effectuées par la station B. Comme cela est représenté à la figure 1 la station A prend l'initiative de la phase choix d'antennes en transmettant, suivant l'étape représentée en 1, une séquence déterminée de bits pour indiquer à la station B le passage dans cette phase puis transmet, suivant l'étape 2, une trame de roulement formée par une suite alternée de bits 1 et 0 de longueur L, elle-même suivie, à l'étape 3, d'une séquence de confirmation.

La station B réagit de la façon représentée par l'organigramme de la figure 2 en détectant à l'étape 4 la séquence de choix d'antennes qu'elle reçoit sur une antenne omnidirectionnelle. Puis la station B passe, en exécutant les étapes 5 et 6, sur une antenne directive de son réseau (antenne n°1) pour mesurer, à l'étape 7, la gigue de phase existant sur la séquence de bits qu'elle reçoit et lorsque cette mesure est terminée la valeur de la gigue de phase trouvée est mémorisée à l'étape 8. A la fin de l'exécution de l'étape 8 la station B se branche, par l'exécution de l'étape 9, sur l'antenne suivante et recommence l'exécution des étapes 7 et 8. Le procédé se déroule ainsi de la même façon à chaque nouveau branchement de la station B sur une nouvelle antenne de son réseau d'antennes et lorsque à l'étape 10, la gigue de phase de la dernière antenne du réseau a été mémorisée, le procédé passe à l'exécution de l'étape 11 qui consiste à commuter la station B sur l'antenne directive du réseau qui possède la gigue de phase la plus faible. A l'étape 12 la station B effectue une analyse de la séquence de confirmation qu'elle reçoit de la station A en calculant le nombre de bits erronés présents dans cette séquence. Si à l'étape 14 le nombre de bits erronés trouvés est inférieur à un seuil déterminé l'antenne sélectionnée est définitivement retenue par contre, si le nombre de bits erronés est supérieur au seuil déterminé elle demande, par l'exécution de l'étape 16, une nouvelle activation de la séquence choix d'antennes.

Pour la bonne exécution du procédé, la longueur temporelle de la trame de roulement doit être de l'ordre de n x N/R ou n représente le nombre d'antennes directives de la station B, R est le débit en ligne et N représente le nombre de bits nécessaires pour la mesure de la gigue de phase des signaux binaires reçus sur chaque antenne.

La mesure de la gigue de phase met à profit la relation existant entre le taux d'erreur binaire d'un canal de transmission et le rapport signal à bruit dans ce canal, et la relation existant entre la gigue de phase des informations binaires reçues et le rapport signal à bruit dans le canal. Les figures 3 et 4 représentent les graphes de ces deux relations dans le cas d'une modulation où les informations binaires commandent un déplacement de la fréquence d'un ton basse fréquence entre deux valeurs fixées. Sur la figure 3 la gigue de phase des informations binaires est représentée par le rapport $\sigma T/T$, ou $\sigma T$ est l'écart type de la durée d'une information binaire et où T est la durée moyenne de cette information.

Ce graphe peut être obtenu expérimentalement en réalisant, à l'aide par exemple d'un oscilloscope, une estimation visuelle de la gigue de phase pour diverses valeurs de rapport signal à bruit où bien encore à l'aide d'un calcul théorique. Le graphe de la deuxième relation est bien connu et est disponible dans de nombreux ouvrages tel que celui de : L.C. SCHOOLEY AND G.R. DAVIS intitulé "Jitter Effets on BIT Error Rate Reexamined" de IEEE Transactions on Communications, volume COM 29 n° 6 June 1981.

Il est donc possible à partir des graphes des figures 3 et 4 d'établir une table donnant une valeur du taux d'erreur binaire en fonction d'une valeur de la gigue de phase représentée par $\sigma T/T$. Ce procédé suppose naturellement que l'émetteur ne modifie pas la phase des informations binaires en introduisant une gigue dans les instants d'émission de ces informations, et il suppose que la réception ne modifie pas non plus la durée des informations binaires qu'il reçoit.

L'écart type $\sigma T$ peut également être calculé à l'aide de la relation :

$$\sigma^2 T = \sum_{i=1}^{m} \frac{(d_i - moy(d_i))^2}{m} \qquad (1)$$

où m est le nombre d'informations binaires dont la durée est prise en compte, et $moy(d_i)$ est la moyenne de ces durées. Pour éviter le calcul de $moy(d_i)$ cette valeur moyenne peut être remplacée par la valeur de la durée nominale des informations binaires du signal numérique reçu, cette durée nominale étant normalement connue de la station de réception.

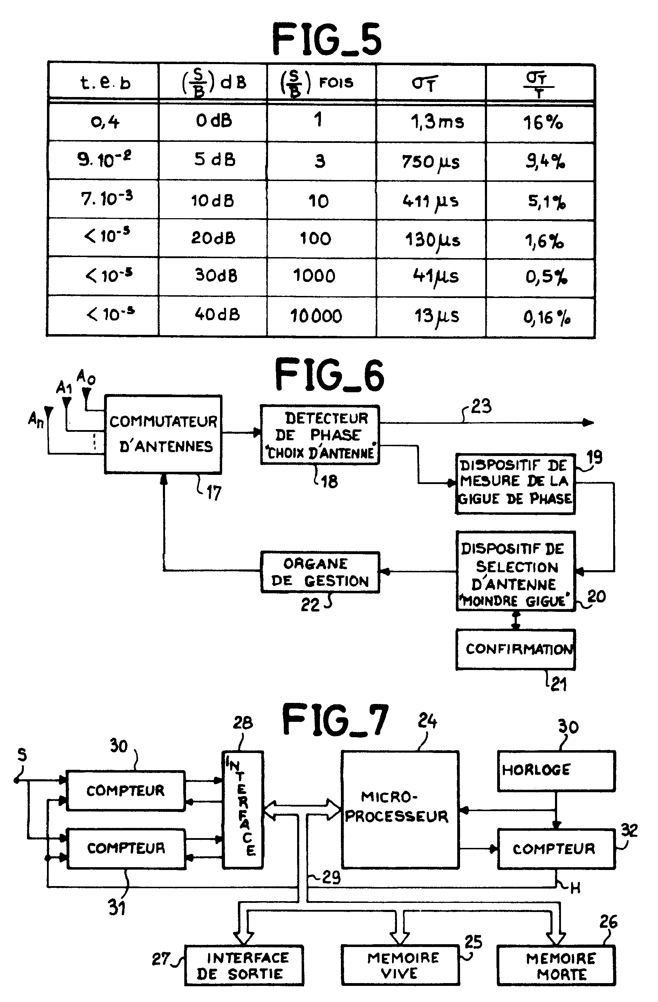

Des résultats obtenus en application de la méthode précédente dans un exemple de transmissions où le débit d'informations reçues est de 125 bits par seconde, où l'excursion en fréquence $\Delta F$ est égale à 425 Hertz et où la bande de bruit a une largeur $B_b$= 2700 Hz sont indiqués dans le tableau de la figure 5. Ce tableau donne, la valeur de l'écart type $\sigma T$ en fonction du rapport signal à bruit S/B en décimal et en fonction du rapport S/B en décibel, la relation entre les valeurs de signal à bruit et le taux d'erreur binaire (teb) ; et les valeurs de la gigue de phase $\sigma T/T$ correspondant aux valeurs de l'écart type $\sigma T$. Il apparaît, que plus la valeur de la gigue de phase $\sigma T/T$ est faible, plus le rapport signal à bruit est prépondérant et plus est satisfaisante la qualité de la transmission.

Un mode de réalisation d'une station fonctionnant conformément au procédé de l'invention est représenté à la figure 6. La station de réception représentée comprend un commutateur d'antennes 17, un détecteur de phase de choix d'antennes 18, un dispositif de mesure de la gigue de phase 19, un dispositif de sélection d'antennes de moindre gigue 20, un dispositif de confirmation 21 et un organe de gestion 22 du commutateur d'antenne.

Le commutateur d'antennes 17 établit, sous la commande de l'organe de gestion 22, les liaisons du détecteur de phase de choix d'antennes 18 avec d'une part, une antenne omnidirectionnelle A0 et d'autre part, n antennes directives A1, An. Le détecteur de phase de choix d'antennes 18 est mis en communication avec le dispositif de mesure de gigue de phase 19, le dispositif de sélection d'antennes de moindre gigue 20 et l'organe de gestion 22. Ces éléments exécutent les phases du procédé représenté à la figure 2 en relation avec le dispositif de confirmation 21.

Une structure microprogrammée reprenant l'ensemble des fonctions est représentée à la figure 7. Celle-ci comprend un microprocesseur 24, une mémoire vive 25, une mémoire morte 26 un circuit d'interface de sortie 27 et un circuit d'interface d'entrée 28 organisés autour d'un bus de donnée, d'adresse et de commande 29. Le signal S entrant dans la station est appliqué sur le circuit d'interface d'entrée 28 au travers de compteurs totalisateurs 30 et 31 qui totalisent respectivement la durée des états 1 ou 0 des éléments binaires du signal S. Ces compteurs progressent au rythme d'un signal d'horloge H obtenu à partir d'un compteur 32 commandé à partir de signaux d'horloge fourni par un circuit d'horloge 30. Le programme nécessaire à l'exécution du procédé correspondant à l'organigramme de la figure 2 et au calcul de la valeur $\sigma T$ est inscrit dans la mémoire morte 26. Le microprocesseur 24 assure l'exécution de ce programme et en particulier vient lire l'état des compteurs 30 et 31 pour chaque état 1 ou 0 du signal S et les valeurs de ces compteurs sont totalisées en mémoire vive 25 pour permettre le calcul à l'aide de la relation (1) de l'écart type $\sigma T$ et le calcul de la gigue de phase $\sigma T/T$ des signaux fournis par chaque antenne.

Bien évidemment l'invention n'est pas limitée aux exemples de réalisations précités, et notamment le procédé peut s'appliquer à tout mode de transmissions numériques d'informations binaires du moment que les informations numériques transmises possèdent un nombre suffisant de transitions pour permettre la mesure de la gigue de phase par les moyens décrits précédemment. Dans ce cas on conçoit que la transmission des trames de roulement n'est plus impérative, si la station réceptrice peut reconnaître, au moyen de l'antenne omnidirectionnelle, des séquences de synchronisation de durée déterminée lui laissant le temps de basculer sur son antenne la mieux adaptée entre deux séquences de synchronisation. Dans cette hypothèse le procédé rend possible la sélection des antennes les mieux adaptées de deux stations tout au long de leur dialogue.

**Revendications**

1. Procédé de sélection automatique d'une antenne de réception directive parmi une pluralité d'antennes de réception d'une station radioélectrique d'émission-réception de signaux numériques, dans lequel la gigue de phase des signaux binaires des trames de roulement reçus successivement sur chacune des antennes directives est calculée pour sélectionner (11) l'antenne directive qui présente la gigue de phase la plus faible, caractérisé en ce qu'il consiste pour calculer la gigue de phase de la trame de roulement reçu sur chaque antenne, à mesurer la durée $d_i$ de m signaux binaires reçus, à calculer la variance $\sigma^2 T$ des valeurs de durée suivant la relation :

$$\sigma^2 T = \sum_{i=1}^{m} \frac{(d_i - moy(d_i))^2}{m} \qquad (1)$$

où $moy(d_i)$ représente la moyenne des durées $d_i$ et à calculer à partir de la valeur de l'écart type $\sigma T$ la gigue

de phase en effectuant le rapport σ T/T ou T représente la durée nominale de chaque signal binaire et en ce que la sélection est suivie de l'analyse d'une séquence de confirmation (12) basée sur le calcul du nombre de bits erronés reçus de la séquence de confirmation.

2. Procédé selon la revendications 1, caractérisé en ce que la station fait partie d'un réseau de stations et en ce que le procédé consiste à donner (1) l'initiative de la sélection d'une antenne dans une station à la station du réseau qui prend l'initiative de dialoguer avec cette station.

3. Procédé selon la revendication 2, caractérisé en ce qu'il est initialisé dans la station devant opérer la sélection par la détection sur une antenne omnidirectionnelle d'une séquence de sélection (4) émise par la station du réseau qui prend l'initiative.

4. Procédé selon l'une quelconque des revendications 1 à 3, caractérisé en ce qu'il consiste à mémoriser (8) les valeurs de gigue de phase mesurée sur chaque antenne avant de sélectionner l'antenne qui présente la gigue de phase la plus faible.

5. Procédé selon l'une quelconque des revendications 1 à 4, caractérisé en ce que le dialogue entre les stations a lieu à l'alternat pendant la phase de choix d'antennes.

## Patentansprüche

1. Verfahren zur automatischen Auswahl einer Empfangs-Richtantenne aus einer Vielzahl von Empfangsantennen einer Sende-Empfangs-Funkstation für digitale Signale, wobei die Phasenschwankung der nacheinander auf jeder der Richtantennen empfangenen Binärsignale der Rollrahmen berechnet wird, um diejenige Richtantenne auszuwählen (11), die die geringste Phasenschwankung aufweist, dadurch gekennzeichnet, daß zur Berechnung der Phasenschwankung des von jeder Antenne empfangenen Rollrahmensignals die Dauer $d_i$ von m empfangenen Binärsignalen gemessen wird, die Varianz $\sigma^2 T$ der Dauerwerte gemäß folgender Gleichung berechnet wird

$$\sigma^2 T = \sum_{i=1}^{m} \frac{(d_i - moy(d_i))^2}{m} \qquad (1)$$

wobei $moy(d_i)$ den Mittelwert der Dauer $d_i$ bildet, und daß ausgehend vom Abweichungswert des Typs $\sigma T$ die Phasenschwankung berechnet wird, indem das Verhältnis $\sigma T/T$ gebildet wird, wobei T die Nenndauer jedes Binärsignals darstellt, und daß der Auswahl eine Analyse einer Bestätigungssequenz (12) folgt, die auf der Berechnung der Anzahl der fehlerhaft empfangenen Bits der Bestätigungssequenz beruht.

2. Verfahren nach Anspruch 1, dadurch gekennzeichnet, daß die Funkstation zu einem Funkstationsnetz gehört und daß das Verfahren darin besteht, die Initiative zur Auswahl einer Antenne in einer Station der Station des Netzes zu geben (1), die die Initiative zum Dialog mit dieser Station ergreift.

3. Verfahren nach Anspruch 2, dadurch gekennzeichnet, daß es in der Station gestartet wird, die die Auswahl durchführen soll, indem eine ungerichtete Antenne eine Selektionssequenz (4) erkennt, die von der Station des Netzes ausgesandt wurde, die die Initiative ergreift.

4. Verfahren nach einem beliebigen der Ansprüche 1 bis 3, dadurch gekennzeichnet, daß die Werte der in jeder Antenne gemessenen Phasenschwankung gespeichert werden (8), ehe die Antenne ausgewählt wird, die die geringsten Phasenschwankungen aufweist.

5. Verfahren nach einem beliebigen der Ansprüche 1 bis 4, dadurch gekennzeichnet, daß der Dialog zwischen den Stationen während der Antennenauswahlphase im Wechselverkehr erfolgt.

## Claims

1. A method for automatically selecting a directional reception antenna among a plurality of reception antennae in a radio electric station for transmitting and receiving digital signals, in which the phase jitter of the binary signals of the roll frames received successively on each of the directional antennae is computed in order to select (11) the one directional antenna having the lowest phase jitter value, characterized in that it consists in computing the phase jitter of the roll frame signal received on each antenna, in measuring the duration $d_i$ of m binary signals received, in computing the variance $\sigma^2 T$ of the values of duration according to the equation

$$\sigma^2 T = \sum_{i=1}^{m} \frac{(d_i - moy(d_i))^2}{m} \qquad (1)$$

wherein $moy(d_i)$ represents the mean value of the durations $d_i$, and in calculating the phase jitter from the deviation value of the type $\sigma T$ by building the ratio $\sigma T/T$ in which T represents the nominal duration of each binary signal, and that the selection is followed by the analysis of a confirmation sequence (12) based on the number of error bits received from the confirmation sequence.

2. A method according to claim 1, characterized in that the station belongs to a network of stations and that the method consists in allotting (1) the initiative in selecting an antenna in a station to that station of the network which takes the initiative in intercommunicating with this station.

3. A method according to claim 2, characterized in that it is initialized in the station which should procede with the selection by detecting via an omnidirectional antenna a selection sequence (4) transmitted by the very station of the network which takes the initiative.

4. A method according to any one of claims 1 to 3, characterized in that it consists in storing (8) the values of the phase jitter measured on each antenna before selecting the antenna which presents the lowest phase jitter.

5. A method according to any one of claims 1 to 4, characterized in that the intercommunication between the stations takes place in an alternate manner during the antenna selection phase.

# FIG_1

STATION A

SEQUENCE CHOIX D'ANTENNE    1

TRAME DE ROULEMENT    2

SEQUENCE DE CONFIRMATION    3

# FIG_3

# FIG_4

# FIG_2

DEBUT STATION B

4  DETECTION SEQUENCE CHOIX D'ANTENNE

5  $i = 1$

6  ANTENNE n°$i$       $i = i+1$  9

7  MESURE DE LA GIGUE

8  MEMORISATION GIGUE

10  $i = i_{MAX}$

11  COMMUTATION SUR ANTENNE DE GIGUE PLUS FAIBLE n°$\ell$

12  ANALYSE DE LA SEQUENCE DE CONFIRMATION

13  CALCUL NOMBRE BITS ERRONES($x$)

16  DEMANDE D'ACTIVATION DE PHASE CHOIX D'ANTENNE

14  $x <$ SEUIL    NON

OUI

15  FIN

7

# FIG_5

| t.e.b | $\left(\frac{S}{B}\right)$ dB | $\left(\frac{S}{B}\right)$ FOIS | $\sigma_T$ | $\frac{\sigma_T}{T}$ |
|---|---|---|---|---|
| 0,4 | 0 dB | 1 | 1,3 ms | 16% |
| $9.10^{-2}$ | 5 dB | 3 | 750 $\mu$s | 9,4% |
| $7.10^{-3}$ | 10 dB | 10 | 411 $\mu$s | 5,1% |
| $< 10^{-5}$ | 20 dB | 100 | 130 $\mu$s | 1,6% |
| $< 10^{-5}$ | 30 dB | 1000 | 41 $\mu$s | 0,5% |
| $< 10^{-5}$ | 40 dB | 10000 | 13 $\mu$s | 0,16% |

# FIG_6

# FIG_7